# EUROPÄISCHE PATENTSCHRIFT

(11) **EP 1 141 670 B1**
(45) Veröffentlichungstag und Bekanntmachung des Hinweises auf die Patenterteilung: **11.07.2007**
(21) Anmeldenummer: 99960982.9
(22) Anmeldetag: 17.11.1999
(51) Int. Cl.: G01L 9/06

(54) **DRUCKSENSOR**
PRESSURE SENSOR
DETECTEUR DE PRESSION

(30) Priorität: 02.12.1998 DE 29821563 U
(43) Veröffentlichungstag der Anmeldung: 10.10.2001
(73) Patentinhaber: Abiomed Europe GmbH, 52074 Aachen (DE)
(72) Erfinder: SIESS, Thorsten, D-52146 Würselen (DE); NIX, Christoph, D-52223 Stolberg (DE)
(74) Vertreter: Selting, Günther
(86) Internationale Anmeldenummer: PCT/EP1999/008834
(87) Internationale Veröffentlichungsnummer: WO 2000/033047

(56) Entgegenhaltungen:
- EP-A- 0 354 479
- EP-A- 0 801 293
- WO-A-92/12408
- US-A- 4 274 423
- US-A- 4 763 098
- US-A- 5 581 038
- PATENT ABSTRACTS OF JAPAN vol. 10, no. 324 (P-512) [2380], 5. November 1986 (1986-11-05) & JP 61 132832 A (SANYO ELECTRIC CO LTD), 20. Juni 1986 (1986-06-20)

## Beschreibung

Die Erfindung betrifft einen ungekapselten gehäuselosen Drucksensor zur Messung des Druckes in einem flüssigen oder gasförmigen Medium und insbesondere einen Drucksensor mit einer Widerstandsanordnung aus Leiterbahnen, die auf einem Substrat in Form eines Halbleiterchips angeordnet sind.

Es ist bekannt zur Messung eines Flüssigkeitsdrucks, z.B. des Blutdrucks im Innern eines Blutgefäßes, einen Drucksensor innerhalb eines Katheters zu verwenden, der einen Halbleiterchip mit einer darauf angeordneten Widerstandsanordnung aufweist. Der Halbleiterchip, der das Substrat bildet, ist unterhalb der Widerstandsanordnung mit einer Ausnehmung versehen, so daß an der Meßstelle eine sehr dünne Wandstärke vorhanden ist. Infolge der Druckeinwirkung tritt eine Biegung der dünnen Wand auf, wodurch sich unterschiedliche Dehnungen der Widerstände der Widerstandsanordnung ergeben. Auf diese Weise kann anhand der Änderung der an der Widerstandsanordnung gemessenen Spannung der auf das Substrat wirkende Druck ermittelt werden. Das Substrat ist auf eine Trägerwand, die sich wiederum in einem Katheter befinden kann, aufgeklebt, wobei die Widerstandsanordnung auf der der Trägerwand abgewandten Seite des Substrats angeordnet ist. Da diese Seite dem Medium ausgesetzt ist, dessen Druck gemessen werden soll, ist sie mit einer zusätzlichen Passivierungsschicht beschichtet, welche verhindert, dass das Medium mit der Widerstandsanordnung bzw. dem Substrat in Kontakt kommt. Zwar sind alle elektrischen Komponenten des Drucksensors bedeckt, jedoch kann insbesondere wenn der Drucksensor in elektrisch leitfähigen Flüssigkeiten betrieben wird, Elektrokorrosion auftreten, die zum Sensorverlust oder zu einer inhärenten Sensordrift führt. Darüber hinaus wirken sich etwaige Beschädigungen der Passivierungsschicht unmittelbar auf das Funktionsverhalten des Sensors aus. Schließlich bereitet die Anwendung solcher Drucksensoren im Blutkreislauf gewisse Probleme, weil fluidbedingte Fehlmessungen und Anlagerung von Blutbestandteilen auftreten können.

Aus DE 39 37 522 A1 ist ein Halbleiter-Drucksensor bekannt, der eine Trägerwand und ein Halbleitersubstrat aufweist. Eine Druckübertragungsöffnung befindet sich in dem Substrat. Diese ist als Vertiefung des Substrats ausgebildet und von einer Membran begrenzt. Die Widerstandsanordnung befindet sich auf derjenigen Seite des Substrats, welche an der Trägerwand anliegt. Zwischen Substrat und Trägerwand befindet sich eine Elastomerdichtung. Diese erstreckt sich jedoch nicht über den Bereit der Membran.

EP 0 801 293 A1 beschreibt einen Druck- oder Differenzdrucksensor mit den Merkmalen des Oberbegriffs des Patentanspruchs 1. Ein Substrat, das eine Widerstandsanordnung trägt, ist mit einer Druckübertragungsöffnung versehen. Diejenige Seite des Substrats, auf der die Widerstandsanordnung angeordnet ist, ist einer Trägerwand zugeordnet. Das Substrat ist mit zwei O-Ringen zwischen zwei Trägerwänden abgestützt. Ein Anschlusskabel, das mit der Widerstandsanordnung verbunden ist, ist als Draht ausgebildet, der senkrecht auf das Substrat stößt und dort verlötet ist.

Der Erfindung liegt die Aufgabe zugrunde, einen ungekapselten gehäuselosen Drucksensor zu schaffen, der unempfindlich gegen Beschädigungen ist und der insbesondere als kleinformatiger Sensor mit hoher Genauigkeit einsetzbar ist.

Die Lösung dieser Aufgabe erfolgt erfindungsgemäß mit den im Patentanspruch 1 angegebenen Merkmalen.

Bei dem erfindungsgemäßen Drucksensor ist diejenige Seite des Substrats, auf der die Widerstandsanordnung angeordnet ist, der Trägerwand zugewandt, wobei zwischen Trägerwand und Substrat eine elastische Zwischenschicht angeordnet ist. Bei diesem Drucksensor sind die auf dem Substrat untergebrachten elektrischen Komponenten zwischen Substrat und Trägerwand geschützt enthalten. Sollten durch äußere Einwirkungen Beschädigungen am Sensor auftreten, so bleiben diese für die Funktion unkritisch, weil nur die Oberseite des Substrats oder Chips betroffen ist. Der Sensor kann aufgrund der geschützten Unterbringung der Widerstandsanordnung in elektrisch leitfähigen Flüssigkeiten betrieben werden, ohne das Elektrokorrosion zum Sensorverlust oder zu einer inhärenten Sensordrift führen würde. Soweit Isolationsschichten erforderlich sind, können diese äußerst dünn gehalten werden. Die erfindungsgemäße gehäuselose Drucksensorausführung führt zu einer kleinformatigen und flachen Anordnung und kann in eine dünne Trägerwand von wenigen Zehntelmillimetern integriert werden ohne erhaben zu sein. Die Trägerwand kann plan oder an einem Rohr gekrümmt sein. Ferner weist der Drucksensor keine Lichtempfindlichkeit auf, da die elektrisch und evtl. Fotogalvanisch aktive Fläche lichtdicht zwischen Substrat und Trägerwand angeordnet ist. Durch die Erfindung wird eine äußerst flache Sensoreinrichtung ohne zusätzliches Sensorgehäuse realisiert, die sogar geeignet ist, in elektrisch leitfähigen Medien Drücke zu messen. Die isolierende Zwischenschicht zwischen der Trägerwand und dem Substrat ist elastisch. Dies bedeutet, daß diese Zwischenschicht gewisse Bewegungen des Sensors in Bezug auf die Trägerwand zuläßt, so daß das Substrat auf der Trägerwand gewissermaßen schwimmend gehalten ist. Dadurch wird eine mechanische Entkopplung des Sensors von der Trägerwand erreicht und es wird sichergestellt, daß mechanische oder temperaturbedingte Deformationen der Trägerwand keine wesentlichen elektrischen Signale hervorrufen. Vorzugsweise wird für die Zwischenschicht Silikonmaterial benutzt.

Gemäß einer bevorzugten Weiterbildung der Erfindung ist die Widerstandsanordnung auf einer dünnen Membran des Substrats angeordnet, welche mit der der Trägerwand zugewandten Oberfläche des Substrats bündig ist, wobei sich hinter der Membran eine Ausnehmung befindet. Der Durchmesser der Ausnehmung liegt in der Größenordnung von 0,1 bis 0,6 mm, so daß die Ausnehmung zu klein ist, um mit üblichen Werkzeugen wie Pinzetten, die versenkt angeordnete dünne Membran zu erreichen und zu beschädigen.

Ein weiterer Vorteil besteht darin, das Kabel die an die Unterseite des Substrats angeschlossen sind, an der Trägerwand durch Kleben oder Zementieren unmittelbar befestigt werden können, wodurch an der Anbindungsstelle eine Zugentlastung eintritt. Fernerhin ist der isolationsgefährdete Anbindungsbereich infolge seiner Anordnung zwischen Substrat und Trägerwand mechanisch geschützt.

Der erfindungsgemäße Drucksensor kann als Absolut-Drucksensor ausgebildet sein. Hierbei ist die Ausnehmung des Substrats evakuiert und mit einer vakuumdichten Schicht bedeckt. Andererseits besteht die Möglichkeit, den Drucksensor als Differenz-drucksensor auszubilden, wobei beide Seiten der Trägerwand und somit auch beide Seiten der dünnen Membran unterschiedlichen Drücken ausgesetzt sind.

Im folgenden werden unter Bezugnahme auf die Zeichnungen Ausführungsbeispiele der Erfindung näher erläutert.

Es zeigen:
- Fig. 1: einen Schnitt durch eine erste Ausführungsform des Drucksensors, der hier als Absolut-Drucksensor ausgebildet ist,
- Fig. 2: eine Unteransicht des Substrats aus Richtung des Pfeiles II-II von Fig. 1, und
- Fig. 3: einen Schnitt durch einen Drucksensor, der als Differenz-Drucksensor ausgebildet ist.

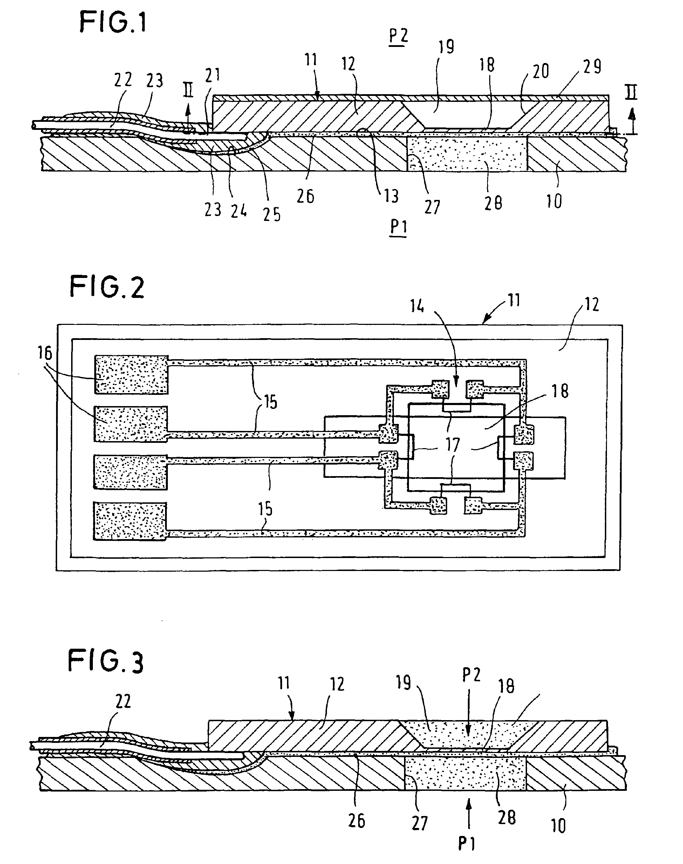

Der Drucksensor nach den Fign. 1 und 2 weist eine Trägerwand 10 auf, die einen Druck P1, der auf einer Seite der Trägerwand herrscht gegen die Umgebung abgrenzt. Es sei angenommen, daß in der Umgebung der Druck P2 herrscht. Die vorzugsweise nur wenige Zehntelmillimeter starke Trägerwand 10 besteht aus einem starren gasdichten Material, insbesondere aus Metall. Sie kann eben sein, jedoch besteht auch die Möglichkeit, daß es sich um ein zylindrisches oder anderweitiges Formteil handelt.

Auf der Trägerwand 10 ist ein Chip 11 angebracht, der aus einem Substrat 12 besteht, welches an seiner unteren Seite 13, die der Trägerwand 10 zugewandt ist, eine elektrische Widerstandsanordnung 14 trägt, die in Fig. 2 dargestellt ist. Das Substrat 12 besteht aus hochreinem Silizium und hat eine Dicke von etwa 200 µm. Im vorliegenden Fall handelt es sich um eine rechteckige Scheibe mit einer Größe von 1400 µm x 600 µm. Auf dem Substrat 12 sind Leiterbahnen 15 im Wege der bei Halbleiterprodukten üblichen Depositions- und Ätztechnik erzeugt.

Zugleich mit den Leiterbahnen 15 sind Kontaktflächen 16 ausgebildet, welche an externe Kabel angeschlossen werden können. Die Leiterbahnen 15 sind ferner mit Widerstandsbrücken 17 zu einer Brückenschaltung verbunden. Im vorliegenden Fall sind vier Widerstandsbrücken 17 vorhanden, die eine übliche Brückenschaltung bilden. Die Widerstandsbrücken 17 bestehen aus schmalen und daher hochohmigen Abschnitten der Leiterbahnen 15. Die Widerstandsbrücken 17 sind im Bereich einer Membran 18 angeordnet. Diese Membran 18 besteht aus einer im Bereich einer Ausnehmung 19 stehengebliebenen dünnen Wand des Substrats 12. Die Ausnehmung 19 entspricht einem Pyramidenstumpf mit schrägen Flanken 20. Ihre Kantenlänge beträgt 250 µm. Die Stärke der Membran 18 beträgt ca. 10 µm. Die Membran 18 erstreckt sich an der unteren Seite des Substrats 12, so daß diese untere Seite insgesamt plan ist, d.h. keine Vertiefungen oder Erhöhungen aufweist.

An die Kontaktflächen 16 sind die Leiter 21 von Sensorkabeln 22 plan angebondet. angeschlossen. Diese Sensorkabel 22 sind mit ihren Isolierungen auf der Trägerplatte 10 mit einem Epoxidkleber 23 fixiert. In der Trägerplatte 10 ist eine Aussparung 24 vorgesehen, in die die Leiter 21 eintauchen, so daß ihre Enden unterhalb des Substrats 12 Platz finden. Die Aussparung 24 ist mit einer isolierenden und elastischen Kunststoffmasse 25 ähnlich der elastischen Zwischenschicht 26 ausgefüllt.

Zwischen der unteren Seite 13 des Chips 11 und der Trägerplatte 10 befindet sich ebenfalls eine elastische Zwischenschicht 26 aus Silikon-Material. Diese Schicht 26 erstreckt sich über die gesamte untere Fläche des Substrats 12, einschließlich der Membran 18. Auf der Zwischenschicht 26 wird der Chip 11 schwimmend getragen.

In der Trägerplatte 10 ist unterhalb der Membran 18 eine Druckübertragungsöffnung 27 vorgesehen, die sich durch die gesamte Stärke der Trägerplatte erstreckt. Die Druckübertragungs-Öffnung 27 ist mit einer Füllung 28 ausgefüllt, die aus dem Material der Zwischenschicht 26 besteht oder aus einem Druckübertragungsgel. Die Unterseite der Füllung 28 ist bündig mit der Unterseite der Trägerwand 10. Dies hat zur Folge, daß das Medium, das durch die Trägerwand 10 begrenzt wird, nicht in die Druckübertragungsöffnung 27 eindringen kann und dort keine Ablagerungen bildet. Zudem können hohe Strömungsgeschwindigkeiten an der Unterseite der Trägerplatte aufgrund des stoßkantenfreien Übergangs zwischen Trägerplatte und Füllung 28 nicht zu Druckartefakten führen.

Die Oberseite des Chips 11, die die Rückseite bildet, ist mit einer vakuumdichten Schicht 29 bedeckt, die beispielsweise ebenfalls aus Silizium besteht. Diese Schicht 29 schließt die Ausnehmung 19 nach außen ab. Die Ausnehmung 19 ist evakuiert. Der Druck, der über die Füllung 28 auf die Membran 18 einwirkt, ist der Druck P1 und die Verformung der Membran 18 ist ausschließlich von diesem Druck P1 abhängig. Folglich ist der Drucksensor ein Absolutdrucksensor.

Fig. 3 zeigt das Ausführungsbeispiel von Fig. 1 in modifizierter Form als Differenz-Drucksensor. Hierbei ist die Schicht 29 fortgelassen, so daß auf die eine Seite der Membran 18 der Druck P1 und auf die Rückseite der Membran der Druck P2 wirkt. Der Differenz-Drucksensor mißt also die Differenz P1 minus P2. Hierbei kann die Ausnehmung 19 mit einem druckübertragenden Gel 30 oder Silikon ausgefüllt werden.

## Patentansprüche

1. Drucksensor mit einer auf einem Substrat (12) angeordneten aus Leiterbahnen bestehenden Widerstandsanordnung (14), einer Trägerwand (10), an der das Substrat (12) befestigt ist, und einer in der Trägerwand (10) vorgesehenen, der Widerstandsanordnung (14) gegenüberliegenden Druckübertragungsöffnung (27), die einer ebenen Seite des Substrats (12) zugewandt ist,
wobei das Substrat (12) mit derjenigen Seite (13), auf der die Widerstandsanordnung (14) angeordnet ist, der Trägerwand (10) zugewandt ist und zwischen Trägerwand (10) und Substrat (12) eine elastische Zwischenschicht (26) angeordnet ist,
und wobei auf der die Widerstandsanordnung (14) tragenden Seite (13) des Substrats (12) Kontaktflächen (16) angeordnet sind,
**dadurch gekennzeichnet,**
**dass** an die Kontaktflächen (16) Anschlusskabel (22) flach angeschlossen sind, die in eine Aussparung (24) der Trägerwand (10) eintauchen.

2. Drucksensor nach Anspruch 1, wobei die Druckübertragungsöffnung (27) mit dem Material der Zwischenschicht (26) im wesentlichen ausgefüllt ist.

3. Drucksensor nach Anspruch 1 oder 2, wobei die Widerstandsanordnung (14) auf einer dünnen Membran (18) des Substrats (12) angeordnet ist, welche mit der der Trägerwand (10) zugewandten Oberfläche des Substrats (12) bündig ist, wobei sich hinter der Membran (18) eine Ausnehmung (19) befindet.

4. Drucksensor nach Anspruch 3, wobei die Ausnehmung (19) des Substrats (12) evakuiert und mit einer vakuumdichten Schicht (29) bedeckt ist.

5. Drucksensor nach einem der Ansprüche 1 - 4, **dadurch gekennzeichnet, dass** die Aussparung (24) mit einer isolierenden und elastischen Kunststoffmasse (25) ausgefüllt ist.

## Claims

1. A pressure sensor comprising a resistance unit (14) consisting of strip conductors (15) and arranged on a substrate (12), a support wall (10) to which the substrate (12) is attached, and a pressure transmitting opening (27) opposite the resistance unit (14),
the substrate (12) facing the support wall (10) with the side (13) on which the resistance unit (14) is provided, and an elastic intermediate layer (26) being arranged between the support wall (10) and the substrate (12),
and wherein on the side (13) of the substrate (12) bearing the resistance unit (14) contact surfaces (16) are provided,
**characterized in that**
connecting wires (22) are planarly connected to the contact surfaces (16), which wires plunge into a cutout (24) of the support wall (10).

2. The pressure sensor of claim 1, wherein the pressure transmitting opening (27) is substantially filled with the material of the intermediate layer (26).

3. The pressure sensor of claim 1 or 2, wherein the resistance unit (14) is provided on a thin membrane (18) of the substrate (12) which is flush with the surface of the substrate (12) facing the support wall (10), a recess (19) being provided behind the membrane (18).

4. The pressure sensor of claim 3, wherein the recess (19) of the substrate (12) is evacuated and covered with a vacuum-tight layer (29).

5. The pressure sensor of one of claims 1-4, wherein the cutout (24) is filled with an insulating and elastic plastics mass (25).

## Revendications

1. Capteur de pression comprenant un agencement de résistances (14) formé de pistes conductrices et disposé sur un substrat (12), une paroi-support (10) sur laquelle est fixé le substrat (12), et un orifice (27) de transmission de pression, prévu dans la paroi-support (10) en regard de l'agencement de résistances (14), orifice qui est tourné vers un côté plat du substrat (12),
dans lequel le substrat (12), du côté (13) sur lequel est disposé l'agencement de résistances (14), est tourné vers la paroi-support (10), et une couche intermédiaire élastique (26) est disposée entre la paroi-support (10) et le substrat (12),
et dans lequel, sur le côté (13) du substrat (12) portant l'agencement de résistances (14), sont disposées des surfaces de contact (16),
**caractérisé en ce que**
des câbles de raccordement (22) sont raccordés à plat aux surfaces de contact (16), câbles qui pénètrent dans un évidement (24) de la paroi-support (10).

2. Capteur de pression selon la revendication 1, dans lequel l'orifice (27) de transmission de pression est essentiellement rempli par le matériau de la couche intermédiaire (26).

3. Capteur de pression selon la revendication 1 ou 2, dans lequel l'agencement de résistances (14) est disposé sur une membrane mince (18) du substrat (12), laquelle est en affleurement avec la surface du substrat (12) tournée vers la paroi-support (10), un évidement (19) se trouvant derrière la membrane (18).

4. Capteur de pression selon la revendication 3, dans lequel l'évidement (19) du substrat (12) est évacué et recouvert d'une couche (29) étanche au vide.

5. Capteur de pression selon l'une des revendications 1 à 4, **caractérisé en ce que** l'évidement (24) est rempli d'une masse (25) de matière plastique isolante et élastique.
